# EUROPÄISCHE PATENTSCHRIFT

(11) **EP 3 064 896 B1**
(45) Veröffentlichungstag und Bekanntmachung des Hinweises auf die Patenterteilung: **13.12.2017**
(21) Anmeldenummer: 16158072.5
(22) Anmeldetag: 01.03.2016
(51) Int. Cl.: G01B 21/04, G01B 5/00, G05B 19/19

(54) **VERFAHREN ZUR ELEKTRONISCHEN ANSTEUERUNG EINES MESSSTATIVS**
METHOD FOR ELECTRONICALLY CONTROLLING A MEASUREMENT SUPPORT
PROCEDE DE COMMANDE ELECTRONIQUE D'UN SUPPORT DE MESURE

(30) Priorität: 04.03.2015 DE 102015103136
(43) Veröffentlichungstag der Anmeldung: 07.09.2016
(73) Patentinhaber: Helmut Fischer GmbH Institut für Elektronik und Messtechnik., 71069 Sindelfingen (DE)
(72) Erfinder: Fischer, Helmut, 6315 Oberägeri (CH)
(74) Vertreter: Mammel und Maser

(56) Entgegenhaltungen:
- DE-A1- 3 011 148
- DE-A1-102010 011 633

## Beschreibung

Die Erfindung betrifft ein Verfahren zur elektronischen Ansteuerung eines Messstativs mit einer Verfahrbewegung von zumindest einer Messsonde aus einer Ausgangsposition in eine Messposition, in welcher die Messsonde auf einer Oberfläche eines Messgegenstandes aufliegt, insbesondere zur Messung der Dicke dünner Schichten.

Aus der DE 10 2010 011 633 A1 ist ein Messstativ sowie ein Verfahren zu dessen elektronischen Ansteuerung bekannt. Vor der Durchführung einer Messung der Dicke dünner Schichten auf einem Messgegenstand mit einem solchen Messstativ wird eine Lernroutine durchgeführt, wodurch die Verfahrbewegung der Messsonde aus einer Ausgangsposition in eine Messposition erfasst wird, so dass jede beliebige Messsonde auf eine Messaufgabe in Abhängigkeit des Messgegenstandes einjustiert werden kann und ein sanftes Aufsetzen der Messsonde auf der Oberfläche des Messgegenstandes ermöglicht ist. Dabei wird ein Abstand zwischen einer Ausgangsposition und einer Messposition auf dem Messgegenstand dadurch erfasst, dass eine Verfahrbewegung der Messsonde aus einer Ausgangsposition in eine Messposition angesteuert wird, wobei beim Aufsetzen der Messsonde auf der Messoberfläche ein Freilauf aktiviert wird, durch welchen der Hubweg des Stößels, der die Messsonde aufnimmt, von einer Antriebseinrichtung entkoppelt wird. Durch die Aktivierung des Freilaufs wird ein Signal mittels einer Gabellichtschranke ausgegeben und dadurch die Anzahl von Impulsen eines Weggebers ausgehend von dem voreingestellten Ausgangspunkt bis zur Aktivierung des Freilaufs erfasst. Dadurch wird der Verfahrweg für die Messsonde bestimmt. Des Weiteren wird beim Aktivieren des Freilaufs der Motor stillgesetzt und ein Nachlaufen des Motors erfasst. Für die nachfolgende Durchführung der Messung wird die Verfahrbewegung in einen Eilgang und einen Kriechgang untergliedert, wobei der Kriechgang durch den erfassten Verfahrweg des nachlaufenden Motors bestimmt wird. Dadurch kann ein sanftes Aufsetzen der Messsonde auf der Messoberfläche des Messgegenstandes erzielt werden.

Der Erfindung liegt die Aufgabe zugrunde, ein Verfahren zur elektrischen Ansteuerung eines Messstativs mit einer Verfahrbewegung von zumindest einer Messsonde aus einer Ausgangsposition in eine Messposition weiter zu verbessern, die auch bei Messstativen zum Einsatz kommen können, bei welcher die Ermittlung eines Verfahrweges ohne eine Freilaufaktivierung erfolgt.

Diese Aufgabe wird durch ein Verfahren gemäß den Merkmalen des Anspruchs 1 gelöst. Weitere vorteilhafte Ausgestaltungen und Weiterbildungen sind in den weiteren abhängigen Ansprüchen angegeben.

Bei dem erfindungsgemäßen Verfahren ist ebenfalls eine Lernroutine vorgesehen, wobei bei dieser Lernroutine die Messsonde aus einer voreingestellten Ausgangsposition mit einer vorbestimmten Fahrgeschwindigkeit abgesenkt wird, bis die Messsonde auf einer Messoberfläche des Messgegenstandes oder auf einem Messgegenstand entsprechenden Kalibriernormal aufliegt und zum Zeitpunkt des Aufliegens der Messsonde auf der Messoberfläche des Messgegenstandes von der Messsonde ein Steuersignal ausgegeben und der Motor stillgesetzt wird. Dieses Steuersignal kann unmittelbar oder mittelbar über die Antriebssteuerung den Motor stillsetzen. Durch die Bestimmung einer Anzahl von Impulsen des Motors oder eines mit dem Motor gekoppelten Weggebers vom Beginn der Verfahrbewegung der Messsonde aus der voreingestellten Ausgangsposition bis zum Stillsetzen des Motors in der Messposition wird der Verfahrweg für die neue Messaufgabe erfasst. Zur nachfolgenden Durchführung von einer oder mehreren Messungen wird die Messsonde aus der Ausgangsposition in die Messposition übergeführt, wobei der Verfahrweg in einen Eilgang und einen Kriechgang, ausgehend von der gesamten Anzahl der ermittelten Impulse, untergliedert wird sowie die Anzahl der Impulse für den Eilgang um die Anzahl der Impulse für den Kriechgang reduziert wird, wobei die Anzahl der Impulse für den Verfahrweg im Eilgang ein Vielfaches von der Anzahl der Impulse des Verfahrweges im Kriechgang umfasst. Dadurch kann die Bestimmung des Verfahrweges von einer voreingestellten Ausgangsposition in eine Messposition - also beim Aufliegen der Messsonde auf einer Oberfläche des Messgegenstandes - vereinfacht werden. Darüber hinaus lässt sich durch die Bestimmung der Anzahl der Impulse für einen Kriechgang eine spezifische Anpassung an unterschiedliche Ansteuervorrichtungen oder Motoren von Messstativen ermöglichen, die unterschiedliche Verzögerungen aufweisen können. Durch die Wegstrecke des Kriechgangs kann ein sanftes Aufsetzen auf der Messoberfläche des Messgegenstandes erzielt werden, so dass auch die Verfahrgeschwindigkeit aus dem Eilgang hinreichend reduziert und abgebaut wird. Ein solches Verfahren ermöglicht auch die Verwendung eines Messstativs ohne eine Freilaufaktivierung, also Sensoranordnung im Freilauf, zwischen einer die Messsonde aufnehmenden Halterung mit Stößel und einer Antriebsvorrichtung.

Bevorzugt werden beim Annähern der Messsonde auf die Messoberfläche des Messgegenstandes oder des Kalibriernormals eine Signaländerung der Messsonde erfasst und beim Erfassen eines konstanten Messsignals durch die Messsonde als Steuersignal zum Stillsetzen des Motors ausgegeben. Dadurch kann in einfacher Weise mittels der Messsonde während der Lernroutine der Verfahrweg zwischen der voreingestellten Ausgangsposition und der Messoberfläche erkannt, daraus bestimmt und erfasst werden.

Des Weiteren ist wird bevorzugt die Geschwindigkeitsreduzierung aus dem Eilgang in einen Kriechgang mit einer Funktion von zumindest 1:10 verringert. Dadurch ist eine kontinuierliche Abnahme der Verfahrgeschwindigkeit mit zunehmender Annäherung der Messsonde an die Messoberfläche einstellbar. Alternativ kann auch eine diskontinuierliche Reduzierung der Verfahrgeschwindigkeit vorgesehen sein, welche mit zunehmendem Verfahrweg reduziert wird.

Des Weiteren wird bevorzugt die vorbestimmte Verfahrgeschwindigkeit für die Lernroutine beim Absenken der Messsonde auf die Messposition geringer als die Eilgeschwindigkeit bei der Durchführung einer Messung angesteuert. Zwar wird die Zeitdauer für die Lernroutine geringfügig gegenüber der Durchführung einer Messung verlängert, jedoch kann dadurch ein gesichertes Aufsetzen ohne eine Beeinträchtigung der Messsonde und/oder der Messoberfläche ermöglicht sein.

Eine weitere bevorzugte Ausführungsform des Verfahrens sieht vor, dass nach dem Durchführen der Lernroutine, insbesondere auf einer Messoberfläche des Messgegenstandes, für nachfolgende Messungen der Messgegenstand um zumindest eine weitere Messposition verschoben wird. Dadurch kann die Präzision der Messung für den Messgegenstand erhöht werden. Vorteilhafterweise werden mehrere Messpositionen auf einer Messoberfläche des Messgegenstandes angefahren. Dadurch kann auch die Gleichmäßigkeit einer Beschichtung oder Schichtdicke einer Beschichtung erfasst werden.

Des Weiteren wird vorteilhafterweise für den Verfahrweg der Messsonde im Kriechgang die Anzahl von Impulsen derart bestimmt, dass der Verfahrweg im Kriechgang kleiner als die Dicke der zu messenden Schicht auf dem Gegenstand oder die Dicke des Messgegenstandes ist. Dadurch kann eine erhebliche zeitliche Reduzierung eines Messzyklus erzielt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Darstellung eines Messstativs,
Figur 2 eine schematische Seitenansicht auf ein Gehäuse des Messstativs gemäß Figur 1 mit einer Messsonde in einer Ausgangsposition,
Figur 3 eine perspektivische Ansicht auf eine Stirnseite des Gehäuses des Messstativs gemäß Figur 1,
Figur 4 eine schematische Seitenansicht auf das Gehäuse des Messstativs mit einer Messsonde in einer Messposition,
Figur 5 eine schematische Detailansicht einer Schaltvorrichtung des Messstativs gemäß Figur 1, und
Figur 6 eine perspektivische Ansicht auf eine Rückwand des Gehäuses des Messstativs gemäß Figur 1 mit einer daran angeordneten Gewichtsentlastungseinrichtung.

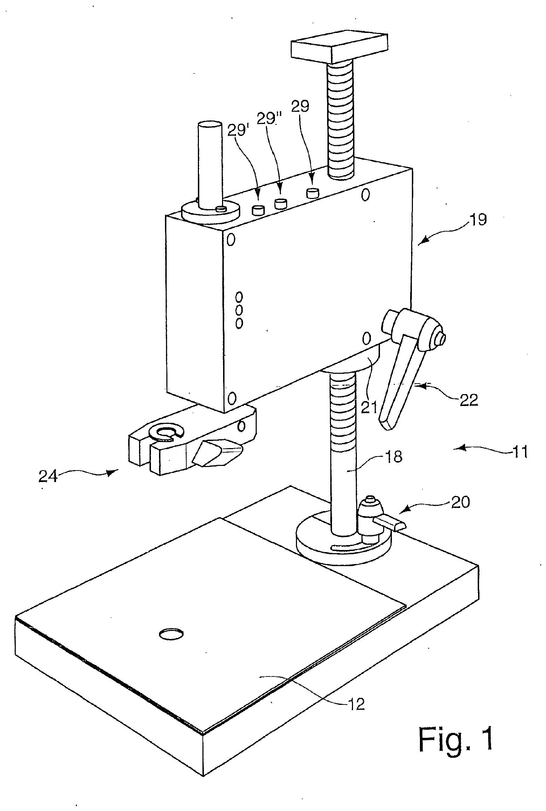

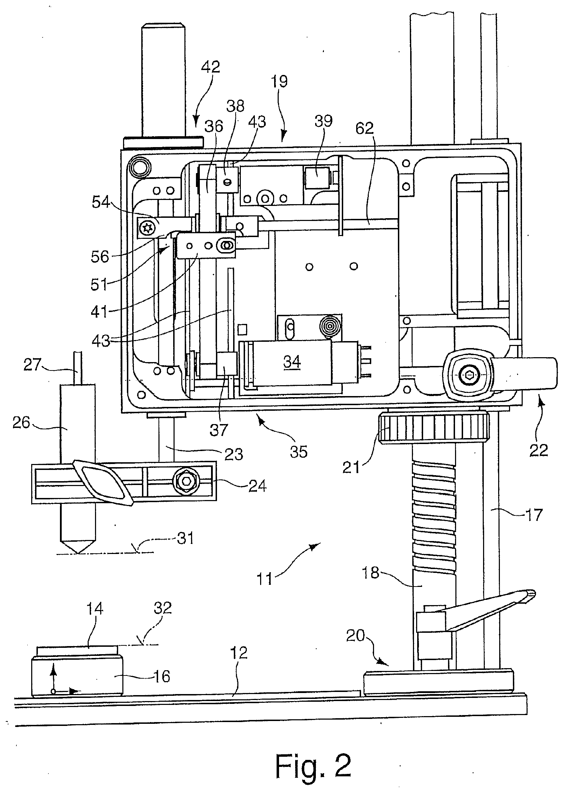

In Figur 1 ist perspektivisch ein Messstativ 11 dargestellt, in Figur 2 eine Seitenansicht. Dieses Messstativ 11 umfasst einen Messtisch 12, auf welchem einzelne Messobjekte oder Messgegenstände 14 unmittelbar aufgelegt werden können oder von einer Aufnahme 16 gehalten werden. Am Fuß des Messstativs 11 oder am Messtisch 12 ist eine senkrecht stehende Säule 17 vorgesehen, welche mit einer Gewindesäule 18 ein Gehäuse 19 höhenverstellbar aufnimmt. Durch die zwei zueinander benachbart angeordneten Säulen 17, 18 kann eine Parallelführung zur leichten Höhenverstellung gegeben sein. Eine Ausrichtung des Gehäuses 19 wird durch den Einstellmechanismus 20 ermöglicht. Über eine Stellschraube 21 kann die Höhe eingestellt werden. Zusätzlich ist ein Spannmechanismus 22 vorgesehen, um das Gehäuse 19 in der Höhe zum Messtisch 12 zu fixieren.

Den Säulen 17, 18 gegenüberliegend ist am Gehäuse 19 ein Stößel 23 auf und ab bewegbar aufgenommen. Am unteren Ende des Stößels 23 ist eine Aufnahme 24 zur lösbaren Fixierung von Messsonden 26 oder Sensoren oder dergleichen vorgesehen. Die Aufnahme 24 kann alternativ auch zur Aufnahme von mehreren Messsonden 26 oder Sensoren ausgebildet sein. Die Messsonde 26 ist beispielsweise für die Messung der Dicke dünner Schichten vorgesehen. Diese Messsonde 26 weist ein Sensorelement mit einer Aufsetzkalotte auf, welche auf eine Messoberfläche des Messgegenstandes 14 aufsetzbar ist. Am gegenüberliegenden Ende der Messsonde 26 ist eine Anschlussleitung 27 vorgesehen, welche an einer nicht näher dargestellten separaten Messvorrichtung angeschlossen oder an einem nicht näher dargestellten Anschluss des Messstativs einer Steuer- und Regeleinrichtung an einer Stirnseite des Gehäuses 19 anschließbar ist.

An einer Oberseite des Gehäuses 19 sind beispielsweise drei Bedienelemente 29, insbesondere Taster, vorgesehen, deren Funktion nachfolgend noch beschrieben wird.

In Figur 2 ist die Messsonde 26 in einer Ausgangsposition 31 angeordnet. Durch den Stößel 23 kann die Messsonde 26 abgesenkt und in eine Messposition 32 übergeführt werden, die in diesem Ausführungsbeispiel einer Aufsetzposition auf der Messoberfläche des Messgegenstandes 14 entspricht. Der zwischen der Ausgangsposition 31 und Messposition 32 liegende Abstand beziehungsweise Verfahrweg ist kleiner als ein Arbeitsbereich oder Hubweg des Stößels 23. Das Gehäuse 19 wird bevorzugt über die Stellschraube 21 derart zur Messoberfläche des Messgegenstandes 14 vorpositioniert, dass sich die Ausgangsposition 31 und die Messposition 32 innerhalb des Arbeitsbereiches des Stößels 23 befinden.

In dem Gehäuse 19 ist zur Ansteuerung einer Verfahrbewegung ein elektrischer Motor 34 vorgesehen, der eine Antriebseinrichtung 35 antreibt, welche mit dem Stößel 23 verbunden ist. Die Antriebseinrichtung 35 umfasst ein Antriebselement 36, welches insbesondere als Zahnriemen ausgebildet ist. Dieses Antriebselement 36 ist durch eine obere und untere Umlenkrolle 37, 38 aufgenommen. Diese Umlenkrollen 37, 38 sind bevorzugt als Zahnwalzen ausgebildet und an die Kontur der Zähne des Zahnriemens angepasst. Durch die Auswahl des Zahnriemens und der Zahnwalze ist eine schlupffreie Übertragung der Antriebsbewegung ermöglicht. Die untere Umlenkrolle 37 ist unmittelbar an der Antriebsachse des Motors 34 befestigt. Die obere Umlenkrolle 38 ist an einer Drehachse vorgesehen, die Teil eines Weggebers 39 ist. Dieser Weggeber 39 ist als Rotations-Encoder, insbesondere als programmierbarer Rotations-Encoder, vorgesehen, der in Abhängigkeit der Verfahrbewegung der Messsonde 26 von der Ausgangsposition 31 zur Messposition 32 Impulse erfasst und diese erfassten Impulse an eine Steuer- und Regeleinrichtung weiterleitet. Alternativ kann der Weggeber auch in dem Motor 34 integriert sein.

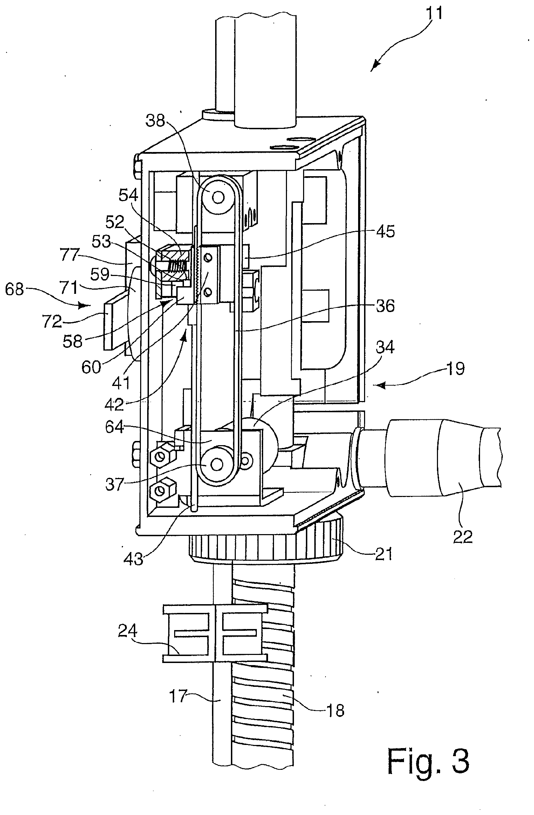

An dem Antriebselement 36 ist ein Koppelelement 41 vorgesehen, welches in Figur 3 näher dargestellt ist. Entlang einer Führung 42, welche vorzugsweise zwei parallel zueinander ausgerichtete Führungselemente 43, insbesondere Führungsstangen, umfasst, wird das Koppelelement 41 geführt. Das Koppelelement 41 ist durch eine Klemmbefestigung mit dem Antriebselement 36 verbunden. Das Koppelelement 41 weist in der Draufsicht gesehen eine U-förmige Kontur auf, so dass innerhalb den beiden Schenkeln der U-förmigen Kontur das Antriebselement 36 geführt ist und die jeweiligen Schenkel an den Führungselementen 43 angreifen. An dem Koppelelement 41 ist bevorzugt eine Schaltfahne 45 vorgesehen, die mit einem Sensorelement oder einer Gabellichtschranke zusammenwirkt, welche an einer nicht näher dargestellten Leiterplatte angeordnet ist, welche auch Teil der Steuer- und Regeleinrichtung ist. Dadurch kann eine obere Endlage der Antriebseinrichtung 35 erfasst werden. Die Steuer- und Regeleinrichtung ist ebenfalls bevorzugt in dem Gehäuse 19 angeordnet und lediglich zur Darstellung der mechanischen Komponenten aus dem Gehäuse 19 entfernt.

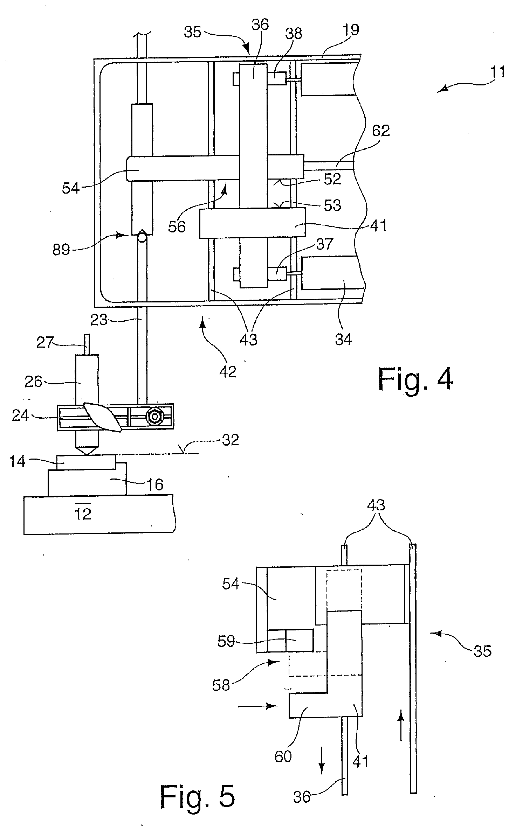

Der Stößel 23 und die Antriebseinrichtung 35 sind durch einen Freilauf 51 (Figur 3) miteinander gekoppelt. Dieser Freilauf 51 wird durch eine am Koppelelement 41 angeordnete Abstützfläche 52 einerseits und eine Anlagefläche 53 andererseits gebildet. Durch das Eigengewicht des Stößels 23 liegt die Anlagefläche 53 auf der Abstützfläche 52 auf. Diese Anlagefläche 53 ist bevorzugt an einem Schlitten 54 vorgesehen, der bevorzugt an der Führung 42 auf und ab bewegbar geführt ist. Der Schlitten 54 weist einen Aufnahmeabschnitt 56 auf, über den der Stößel 23 mit dem Schlitten 54 lösbar gekoppelt ist. Durch das Aufliegen des Stößels 23 auf der Antriebseinrichtung 35 wird während einer Verfahrbewegung der Messsonde 26, die durch den Motor 34 angetrieben wird, unmittelbar nach dem Aufsetzen der Messsonde 26 auf einer Messoberfläche des Messgegenstandes 14 ein Nachlaufen des Motors 34 und somit ein weiteres Absenken des Koppelelementes 41 ermöglicht, ohne dass die Antriebskraft auf den Stößel 23 und somit auf die Messsonde 26
übertragen wird. Diese entkoppelte Position des Freilaufs 51 ist in Figur 4 dargestellt.

Der Freilauf 51 kann eine Schaltvorrichtung 58 umfassen, welche aktiviert wird, sobald ein Abheben der Anlagefläche 53 von der Abstützfläche 52 erfolgt. Hierfür weist die Schaltvorrichtung 58 eine erste Komponente 59 auf, die an dem Schlitten 54 beziehungsweise Stößel 23 angeordnet ist und eine zweite Komponente 60, die mit dem Koppelelement 41 beziehungsweise der Antriebseinrichtung 35 in Verbindung steht. Bevorzugt ist die erste Komponente 59 als Gabellichtschranke und die zweite Komponente 60 als Schaltfinger oder Schaltfahne 45 ausgebildet. Sobald der Freilauf 51 aktiviert wird, wird die zweite Komponente 60 aus der ersten Komponente 59 herausgeführt und ein Schaltsignal an die Steuer- und Regeleinrichtung abgegeben. Diese Position ist strichliniert in Figur 5 dargestellt. An dem Schlitten 54 ist bevorzugt eine Leiterplatte angeordnet, welche das Schaltsignal der Gabellichtschranke, die an der Leiterplatte befestigt ist, verarbeitet und an die Steuer- und Regeleinrichtung weiterleitet. Die hierfür erforderlichen Steuerleitungen sind bevorzugt an einer Führungsstange 62 befestigt, welche in einer Führung nahe der Gewindesäule 18 auf und ab bewegbar ist. Die Führungsstange 62 ist an einem Ende fest mit dem Schlitten 54 verbunden. Gegenüberliegend weist die Führungsstange ein Roll- oder Gleitlager auf, welches in der Führung auf und ab bewegbar ist. Durch diese Führungsstange 62 wird eine mögliche auf den Stößel 23 wirkende radiale Antriebskraft eliminiert.

Eine Lagerstelle 64 zur Lagerung der Antriebsachse des Motors 34 dient gleichzeitig als Anschlag für eine Verfahrbewegung der Antriebseinrichtung 35 nach unten.

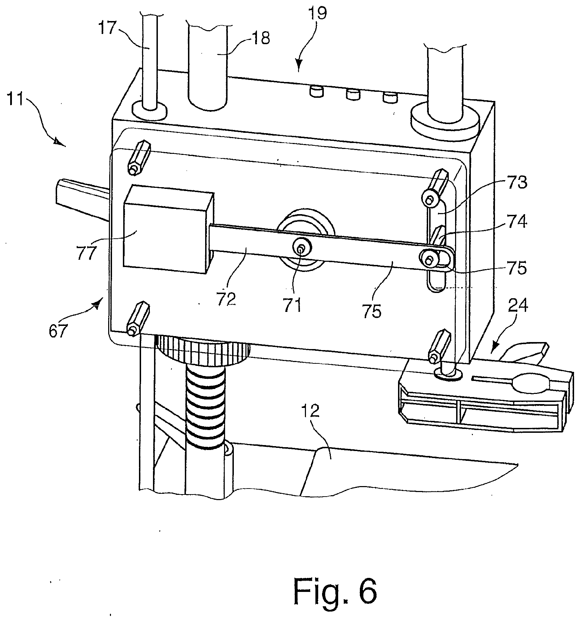

In Figur 6 ist an einer Rückseite 67 des Gehäuses 19 eine Gewichtsentlastungseinrichtung 68 vorgesehen. Diese Gewichtsentlastungseinrichtung 68 kann dann angebracht werden, wenn die Aufnahme 24 mehrere Messsonden 26 oder Sensoren oder größere und schwerere Messsonden 26 oder dergleichen aufnimmt. Diese Gewichtsentlastungseinrichtung 68 bewirkt, dass die zumindest eine Messsonde 26 mit einer nur geringen Eigengewichtskraft auf der Messoberfläche aufsitzt. Die Gewichtsentlastungseinrichtung 68 ist über eine Lagerachse 71 an der Rückwand 67 befestigt und nimmt schwenkbar einen Hebelarm 72 auf. An einem Ende des Hebelarmes 72 ist ein Befestigungsstift 74 vorgesehen, der an dem Stößel 23 angreift und eine Durchgangsbohrung 73 in der Rückseite 67 durchdringt. Der Befestigungsstift 74 ist in einer Langlochausnehmung 75 des Hebelarmes 72 befestigt, so dass während der Schwenkbewegung des Hebelarmes 72 eine Ausgleichsbewegung ermöglicht ist. Gegenüberliegend ist an dem Hebelarm 72 zumindest ein Massenkörper 77 vorgesehen. Dieser kann in Abhängigkeit der aufzunehmenden Last durch die Aufnahme 24 entlang dem Hebelarm 72 verfahrbar sein. Darüber hinaus kann der Massenkörper 77 austauschbar an dem Hebelarm 72 vorgesehen sein, so dass größere oder kleinere Massenkörper 77 daran angebracht werden können. Bevorzugt ist diese Gewichtsentlastungseinrichtung 68 durch einen Deckel abgedeckt und geschützt.

Das vorstehende Messstativ 11 kann auch ohne die Freilaufaktivierung beziehungsweise ohne die Ausgabe eines Sensorsignals bei Auslösung des Freilaufs 51, welcher in Figur 5 näher dargestellt ist, ausgebildet sein.

Das Messstativ 11 kann, wie nachfolgend beschrieben ist, betrieben werden.

Auf dem Messtisch 12 wird unmittelbar oder mittelbar ein Messgegen-stand 14 positioniert. Die Messaufnahme 24 nimmt ein Messelement, insbesondere eine Messsonde 26 zur Messung der Dicke dünner Schichten, auf. Die Messsonde 26 ist an einer separaten, nicht näher dargestellten Messvorrichtung angeschlossen. Das Gehäuse 19 ist in der Höhe derart vorpositioniert, dass der Abstand zwischen der Messsonde 26 beziehungsweise der Sondenspitze der Messsonde 26 und der Messoberfläche des Messgegenstandes 14, welcher in der Messposition 32 liegt, innerhalb des Arbeitsbereiches des Stößels 23 beziehungsweise des Verfahrweges der Antriebseinrichtung 35 zur auf und ab Bewegung des Stößels 23 liegt.

Die Messsonde 26 ist in der Ausgangsposition 31 angeordnet. Vor der Durchführung von Messungen am Messgegenstand 14 wird zunächst die Lage der Messoberfläche des Messgegenstandes 14 zur Ausgangsposition 31 durch eine Lernroutine ermittelt. Diese kann beispielsweise durch Betätigen der Taste 29 eingeleitet werden. Bei dieser Lernroutine wird durch die Steuer- und Regeleinrichtung der Motor 34 bevorzugt mit einem konstanten Strom angetrieben. Dadurch kann eine konstante Verfahrbewegung der Messsonde 26 in der Messposition 32 angesteuert werden. Gleichzeitig werden die von der Messsonde 26 erfassten Signale überwacht. Da die Messsonde 26 in der Ausgangsposition 31 von der Messoberfläche des Messgegenstandes 14 weit entfernt ist, kann die Messsonde 26 kein Messsignal ausgeben beziehungsweise eine Verfahrbewegung nahe der Ausgangsposition 31 in Richtung auf den Messgegenstand erfolgt ohne eine Signaländerung der Messsonde, woraus hervorgeht, dass noch ein hinreichend großer Abstand zur Oberfläche des Messgegenstandes 14 gegeben ist. Gleichzeitig mit dem Beginn der Verfahrbewegung werden die Anzahl der Impulse des Motors 34 oder eines mit dem Motor 34 gekoppelten Weggebers erfasst.

Beim Annähern der Messsonde 26 an den Messgegenstand 1 erfolgt eine Signaländerung, so dass durch die Steuer- und Regeleinrichtung des Motors 34, welche mit der Steuerung der Messsonde 26 verbunden ist, erkannt werden kann, dass eine Annäherung der Messsonde 26 auf den Messgegenstand 14 erfolgt. Beim Aufsetzen der Messsonde 26 auf die Messoberfläche des Messgegenstandes 14 in der Messposition 32 wird durch die Messsonde 26 ein konstantes Messsignal abgegeben. Dieses Messsignal bildet das Steuersignal, durch welches der Motor 34 stillgesetzt wird. Gleichzeitig wird zum Zeitpunkt des Stillsetzens des Motors 34 die Anzahl der Impulse erfasst. Aus der Anzahl der Impulse ist der gesamte Verfahrweg für die neue Messaufgabe bekannt.

Darauffolgend wird die Messsonde 26 wieder in die Ausgangsposition 31 zurückgeführt, und die Lernroutine ist beendet.

Die Lernroutine kann dahingehend modifiziert werden, dass die Absenkbewegung der Messsonde 26 auf den Messgegenstand 14 bei zunehmender Annäherung in Abhängigkeit der durch die Messsonde 26 erfassten Messsignale reduziert wird, so dass ein sanftes Aufsetzen der Sonde 26 auf der Oberfläche des Messgegenstandes 14 ermöglicht ist.

Nach dem Durchführen der Lernroutine wird der durch die Anzahl der Impulse bestimmte Verfahrweg in einen Eilgang und einen Kriechgang untergliedert, wobei die Anzahl der Impulse zur Ansteuerung des Verfahrweges im Eilgang ein Vielfaches gegenüber der Anzahl der Impulse für den Verfahrweg im Kriechgang umfasst. Beispielsweise umfasst der Kriechgang eine Anzahl von Impulsen von weniger als einem Zehntel von der Anzahl der Impulse für den Eilgang.

Darauf folgend wird beispielsweise die Taste 29' gedrückt, um eine einmalige Verfahrbewegung der Messsonde 26 aus der Ausgangsposition in die Messposition und wieder zurück in die Ausgangsposition anzusteuern. Ergänzend kann die Taste 29" vorgesehen sein. Diese Taste 29" kann frei programmierbar sein, wobei diese beispielsweise derart programmierbar ist, dass eine vorbestimmte Anzahl von Wiederholungen zur Durchführung der Messung automatisch durchgeführt wird.

## Patentansprüche

1. Verfahren zur elektrischen Ansteuerung eines Messstativs (11) mit einer Verfahrbewegung von zumindest einer Messsonde (26) aus einer Ausgangsposition (31) in eine Messposition (32), insbesondere zur Messung der Dicke dünner Schichten, bei dem für die Verfahrbewegung der Messsonde (26) ein Motor (34) angesteuert wird, der über eine Antriebseinrichtung (35) einen Stößel (23), an dem die Messsonde (26) befestigt wird, zumindest zur Durchführung einer Messung auf und ab bewegt, **dadurch gekennzeichnet,**
- **dass** vor einer ersten Messung mit der Messsonde (26) eine Lernroutine durchlaufen wird,
- bei der die Messsonde (26) aus der voreingestellten Ausgangsposition (31) mit einer vorbestimmten Verfahrgeschwindigkeit abgesenkt wird, bis die Messsonde (26) auf einer Messoberfläche des Messgegenstandes (26) oder auf einem dem Messgegen-stand entsprechenden Kalibriernormal aufliegt,
- bei der zum Zeitpunkt des Aufliegens der Messsonde (26) auf der Messoberfläche ein Steuersignal durch die Messsonde (26) ausgegeben und der Motor (34) stillgesetzt wird,
- bei der eine Anzahl von Impulsen des Motors (34) oder eines mit dem Motor (34) gekoppelten Weggebers von Beginn der Verfahrbewegung der Messsonde (26) aus der voreingestellten Ausgangsposition (31) bis zum Stillsetzen des Motors (34) in der Messposition (32) erfasst wird und
- bei der die Messsonde (26) in die Ausgangsposition (31) zurück geführt und die Lernroutine beendet wird, und
- **dass** zur nachfolgenden Durchführung von einer oder mehreren Messungen die Messsonde (26) aus der Ausgangsposition (31) in die Messposition (32) übergeführt wird, und
- der Verfahrweg der Messsonde (26) aus der Ausgangsposition (31) in die Messposition (32) in einen Eilgang und vor dem Aufsetzen der Messsonde (26) auf dem Messgegenstand (14) in einen Kriechgang untergliedert wird, wobei die Anzahl der Impulse für den Eilgang um die Anzahl der Impulse für den Kriechgang ausgehend von der gesamten Anzahl der ermittelten Impulse für den Verfahrweg reduziert ist und die Anzahl der Impulse für den Verfahrweg im Eilgang ein Vielfaches von der Anzahl der Impulse des Verfahrweges im Kriechgang ist.

2. Verfahren nach Anspruch 1, **dadurch gekennzeichnet, dass** in der Lernroutine beim Annähern der Messsonde (26) auf die Messober-fläche des Messgegenstandes (14) eine Signaländerung der Messsonde (26) erfasst wird und beim Erfassen eines konstanten Messsignals durch die Messsonde (26) das Steuersignal zum Stillsetzen des Motors (43) ausgegeben wird.

3. Verfahren nach Anspruch 1 oder 2, **dadurch gekennzeichnet, dass** eine Reduzierung der Geschwindigkeit aus dem Eilgang in den Kriechgang mit einer Funktion von zumindest 1:10 verringert wird.

4. Verfahren nach einem der vorhergehenden Ansprüche, **dadurch gekennzeichnet, dass** die vorbestimmte Fahrgeschwindigkeit für die Lernroutine zum Absenken der Messsonde (26) aus der Ausgangsposition (31) in die Messposition (32) geringer als die Eilgeschwindigkeit bei der Durchführung der Messung eingestellt wird.

5. Verfahren nach einem der vorhergehenden Ansprüche, **dadurch gekennzeichnet, dass** nach dem Durchführen der Lernroutine, insbesondere auf einer Messoberfläche des Messgegenstandes (14), der Messgegenstand (14) zur Durchführung von zumindest einer Messung mittels der Messsonde (26) in eine weitere Messposition verschoben wird.

6. Verfahren nach einem der vorhergehenden Ansprüche, **dadurch gekennzeichnet, dass** der Verfahrweg der Messsonde (26) im Kriechgang in Richtung auf die Messoberfläche des Messgegenstandes (14) durch die Anzahl von Impulsen bestimmt wird, welche gleich oder geringer eine Dicke der zu messenden Schicht auf dem Messgegenstand (14) oder der Dicke des Messgegenstandes (14) ist.

## Claims

1. Method for the electrical control of a measurement stand (11) having a drive movement of at least one measurement probe (26) from an initial position (31) into a measurement position (32), in particular for the measurement of the thickness of thin layers, in which a motor (34) is controlled for the drive movement of the measurement probe (26), said motor (34) moving a ram (23), to which the measurement probe (26) is fastened, back and forth via a drive device (35) at least to implement a measurement, **characterised in that**
- before a first measurement with the measurement probe (26), a learning routine is carried out,
- in which the measurement probe (26) is lowered from the default initial position (31) with a predetermined drive speed until the measurement probe (26) is supported on a measurement surface of the measurement object (26) or on a calibration normal corresponding to the measurement object,
- in which, at the point in time of the support of the measurement probe (26) on the measurement surface, a control signal is emitted by the measurement probe (26) and the motor (34) is shut down,
- in which a number of pulses of the motor (34) or of a path sensor coupled to the motor (34) is recorded from the beginning of the drive movement of the measurement probe (26) from the default initial position (31) until the shutdown of the motor (34) in the measurement position (32) and
- in which the measurement probe (26) is guided back into the initial position (31) and the learning routine is ended,
- and
- for the subsequent implementation of one or more measurements, the measurement probe (26) is transferred from the initial position (31) into the measurement position (32), and
- the drive path of the measurement probe (26) from the initial position (31) into the measurement position (32) is divided into a fast speed and, before the setting of the measurement probe (26) on the measurement object (14), a slow speed, wherein the number of pulses for the fast speed is reduced by the number of pulses for the slow speed, originating from the total number of determined pulses for the drive path, and the number of pulses for the drive path at the fast speed is a multiple of the number of pulses of the drive path at the slow speed.

2. Method according to claim 1, **characterised in that**, in the learning routine, during the approach of the measurement probe (26) to the measurement surface of the measurement object (14), a signal change of the measurement probe (26) is recorded and in the case of a constant measurement signal being recorded by the measurement probe (26), the control signal is emitted to shut down the motor (43).

3. Method according to claim 1 or 2, **characterised in that** a reduction of the speed from the fast speed to the slow speed is reduced with a function of at least 1:10.

4. Method according to one of the preceding claims, **characterised in that** the predetermined drive speed for the learning routine to lower the measurement probe (26) from the initial position (31) into the measurement position (32) is adjusted to be lower than the rapid speed during the implementation of the measurement.

5. Method according to one of the preceding claims, **characterised in that**, after the implementation of the learning routine, in particular on a measurement surface of the measurement object (14), the measurement object (14) is shifted into a further measurement position for the implementation of at least one measurement by means of the measurement probe (26).

6. Method according to one of the preceding claims, **characterised in that** the drive path of the measurement probe (26) in the direction of the measurement surface of the measurement object (14) is determined at the slow speed by the number of pulses, which is equal to or smaller than a thickness of the layer to be measured on the measurement object (14) or the thickness of the measurement object (14).

## Revendications

1. Procédé pour la commande électrique d'un support de mesure (11) avec un déplacement d'au moins une sonde de mesure (26) depuis une position initiale (31) jusqu'à une position de mesure (32), en particulier en vue de mesurer l'épaisseur de couches minces, lors duquel pour ledit déplacement de la sonde de mesure (26) est activé un moteur (34) qui, par l'intermédiaire d'un dispositif d'entraînement (35), fait monter et descendre une tige (23) à laquelle est fixée la sonde de mesure (26) au moins en vue de réaliser une mesure, **caractérisé en ce que**
- avant une première mesure, une routine d'apprentissage est parcourue avec la sonde de mesure (26),
- lors de laquelle la sonde de mesure (26) est abaissée avec une vitesse de déplacement prédéterminée, et ce à partir de la position initiale préréglée (31), jusqu'à ce que ladite sonde de mesure (26) repose sur une surface de mesure de l'objet de mesure (26) ou sur un étalon de calibration correspondant à l'objet de mesure,
- lors de laquelle au moment où la sonde de mesure (26) repose sur la surface de mesure, un signal de commande est émis par la sonde de mesure (26) et le moteur (34) est mis à l'arrêt,
- lors de laquelle est saisi un nombre donné d'impulsions émises par le moteur (34) ou par un capteur de course couplé au moteur (34) depuis le début du déplacement de la sonde de mesure (26) lorsque celle-ci quitte la position initiale préréglée (31) jusqu'à la mise à l'arrêt du moteur (34) dans la position de mesure (32) et
- lors de laquelle la sonde de mesure (26) est remise dans la position initiale (31) et la routine d'apprentissage est terminée, et
- **en ce que**, pour la réalisation ultérieure d'une ou de plusieurs mesures, la sonde de mesure (26) est déplacée de la position initiale (31) à la position de mesure (32) et
- la course effectuée par la sonde de mesure (26) lorsque celle-ci quitte la position initiale (31) pour aller à la position de mesure (32) se décompose en une avance rapide et, avant que la sonde de mesure (26) soit posée sur l'objet de mesure (14), en une avance rampante, le nombre des impulsions émises pour l'avance rampante étant déduit du nombre des impulsions émises pour l'avance rapide, et ce à partir du nombre total des impulsions déterminées pour la course, et le nombre des impulsions émises pour la course effectuée en avance rapide étant un multiple du nombre des impulsions émises pour la course effectuée en avance rampante.

2. Procédé selon la revendication 1, **caractérisé en ce que** dans la routine d'apprentissage, un changement de signal de la sonde de mesure (26) est saisi lorsque la sonde de mesure (26) s'approche de la surface de mesure de l'objet de mesure (14) et que le signal de commande provoquant la mise à l'arrêt du moteur (43) est émis par la sonde de mesure (26) lorsqu'un signal de mesure constant est saisi.

3. Procédé selon la revendication 1 ou 2, **caractérisé en ce qu'**une réduction de la vitesse lors du passage de l'avance rapide à l'avance rampante est effectuée à l'aide d'une fonction d'au moins 1:10.

4. Procédé selon l'une quelconque des revendications précédentes, **caractérisé en ce que** la vitesse de déplacement prédéterminée pour la routine d'apprentissage en vue d'abaisser la sonde de mesure (26) de la position initiale (31) à la position de mesure (32) est réglée de manière à être inférieure à la vitesse rapide lors de la réalisation de la mesure.

5. Procédé selon l'une quelconque des revendications précédentes, **caractérisé en ce que**, après l'exécution de la routine d'apprentissage, en particulier sur une surface de mesure de l'objet de mesure (14), l'objet de mesure (14) est décalé dans une autre position de mesure pour la réalisation d'au moins une mesure au moyen de la sonde de mesure (26).

6. Procédé selon l'une quelconque des revendications précédentes, **caractérisé en ce que** la course effectuée par la sonde de mesure (26) en avance rampante en direction de la surface de mesure de l'objet de mesure (14) est déterminée par le nombre d'impulsions qui est égal ou inférieur à une épaisseur de la couche qui doit être mesurée sur l'objet de mesure (14) ou à l'épaisseur de l'objet de mesure (14).
